# EUROPÄISCHE PATENTANMELDUNG

(11) **EP 3 792 375 A1**
(43) Veröffentlichungstag der Anmeldung: **17.03.2021**
(21) Anmeldenummer: 20191674.9
(22) Anmeldetag: 19.08.2020
(51) Int. Cl.: C23C 22/20, B29C 65/48, F16B 5/00, B32B 15/08, C25D 5/50, C25D 13/22

(54) **TOLERANZAUSGLEICH DURCH METALL-KUNSTSTOFF-HYBRIDWERKSTOFF**

(30) Priorität: 10.09.2019 DE 102019213768
(71) Anmelder: ThyssenKrupp Steel Europe AG, 47166 Duisburg (DE)
(72) Erfinder: Grunden, Dr. Philipp, 99094 Erfurt (DE); Schongen, Dr. Fabian, 47906 Kempen (DE); Patberg, Dr. Lothar, 47445 Moers (DE)
(74) Vertreter: ThyssenKrupp Steel Europe AG

(57) **Zusammenfassung**

Die Erfindung betrifft ein dreidimensional geformtes Bauteil einer der IT-Klassen 5-8 enthaltend ein tiefzieh- und streckziehfähiges, platinen- oder bandförmiges Hybrid-Halbzeug, das mindestens ein platinen- oder bandförmiges Metallblech und mindestens eine auf dem Metallblech stoffschlüssig, mindestens bereichsweise aufgebrachte Toleranzausgleichsschicht aus Kunststoff aufweist. Ferner betrifft die vorliegende Erfindung ein Verfahren zur Herstellung eines dreidimensional geformten Bauteils sowie dessen Verwendung.

## Beschreibung

Die Erfindung betrifft ein dreidimensional geformtes Bauteil einer der IT-Klassen 5-8 enthaltend ein tiefzieh- und streckziehfähiges, platinen- oder bandförmiges Hybrid-Halbzeug, das mindestens ein platinen- oder bandförmiges Metallblech und mindestens eine auf dem Metallblech stoffschlüssig, mindestens bereichsweise aufgebrachte Toleranzausgleichschicht aus Kunststoff aufweist. Ferner betrifft die vorliegende Erfindung ein Verfahren zur Herstellung eines dreidimensional geformten Bauteils sowie dessen Verwendung.

Auf verschiedenen Anwendungsgebieten werden zuvor hergestellte Bauteile oder Elemente im Anschluss miteinander verbunden. Dabei kommt es aufgrund von Fertigungstoleranzen der Fügepartner zu ungewünschten Effekten, wie etwa Verschleiß durch Reibung, Schlupf, Leistung-und/oder Wärmeverluste, Undichtigkeiten, Asymmetrien, Zeit- und Kosten-aufwändigen Nacharbeiten, Schwingungen, Rattern, Schallabstrahlung, bis hin zu Funktionsausfällen. Aus dem Stand der Technik sind Maßnahmen zum Toleranzausgleich bekannt. So wird beispielsweise in der WO 2011020687A die Verwendung von flüssigen Fugenmittel zum Toleranzausgleich beschrieben, die beim Zusammenfügen von Schalensegmenten zum Ausgleich der fertigungsbedingten, unvermeidbaren Maßabweichungen als Spaltfüllung eingesetzt werden. Ein weiterer Ansatz zum Toleranzausgleich (DE 102016101634A) ist die Verwendung von Justageelementen zum Positionieren eines Anbauteils in einem Strukturteil eines Fahrzeugs, wie zum Beispiel zwischen Rückleuchte und angrenzenden Verkleidungsteilen, wo enge Toleranzen hinsichtlich von Spaltmaßen einzuhalten sind. Ferner offenbart die DE 202017100058U eine Anordnung verbundener Bauteile mit Toleranzausgleich, wobei ein Verbindungsclip eingesetzt wird, der an einem der Bauteile angeordnet ist.
Gehäuse elektrischer Maschinen werden üblicherweise aus Aluminium im Druckgussverfahren hergestellt. Durch die nachträglichen Dreh- und Fräsarbeiten können hohe Genauigkeiten erzielt werden (IT-Qualität 6-12), die notwendig sind, um eine einwandfreie Funktionsweise der elektrischen Maschine sicherzustellen. Insbesondere für den Rundlauf einer Welle sind hohe Genauigkeiten für den Lagersitz erforderlich, welches im Lagerschild eingesetzt wird.

Aufgabe der vorliegenden Erfindung ist es, die Nachteile des Standes der Technik zu überwinden und dreidimensionale Bauteile zur Verfügung zu stellen, die unter Einhaltung der Toleranzgrenze ohne weiteren oder lediglich mit geringem weiteren Aufwand verbaut werden können. Insbesondere sollen die IT-Qualitäten erreicht werden, wie sie bisher nur mit mechanischen Verfahren wie zum Beispiel Drehen, Fräsen oder Hobeln erzielt werden. Aufgabe ist es ferner 3-dimensionale Bauteile zur Verfügung zu stellen, die verschiedene Formtoleranzen und/oder Lagetoleranzen kompensieren. Allgemein soll die durch das Metallblech vorgegebene IT-Klasse verbessert werden. Weitere Aufgabe ist es, ein Verfahren zur Herstellung solcher Bauteile zur Verfügung zu stellen.

Die Aufgaben werden durch die in den Ansprüchen definierten Gegenstände gelöst.

Eine Ausführung der vorliegenden Erfindung betrifft ein dreidimensional geformtes Bauteil einer der IT-Klassen 5-8 enthaltend (oder bestehend aus) ein tiefzieh- und streckziehfähiges, platinen- oder bandförmiges Hybrid-Halbzeug, das mindestens ein platinen- oder bandförmiges Metallblech und mindestens eine auf dem Metallblech stoffschlüssig, mindestens bereichsweise aufgebrachte Toleranzausgleichschicht aus Kunststoff aufweist; der Bereich des Metallblechs, auf welchem die Toleranzausgleichschicht aufgebracht ist, eine die Haftung der Toleranzausgleichschicht verbessernde Oberfläche aufweist und die Oberfläche der Toleranzausgleichschicht eine mittlere Rauheit Rz von mindestens 0,05 µm bis maximal 1000 µm, auf der dem Metallblech abgewandten Seite, aufweist.

Im Sinne der Erfindung besitzt ein dreidimensional geformtes Bauteil eine Form mit Ausstreckung in alle 3 Raumrichtungen, wobei es sich von dem Ausgangswerkstoff, hier das Hybridhalbzeug, in seiner Form und nicht nur lediglich in seinen Ausmaßen unterscheidet. Mit anderen Worten, Schneiden, Kürzen, Verlängern o. ä. stellt lediglich eine Veränderung bzw. Umformung in einer oder zwei Dimensionen, entlang der x- und/oder y-Achse eines dreidimensionalen Koordinatensystems dar. Eine dreidimensionale Umformung im Sinne der Erfindung ist bevorzugt eine Änderung in z-Richtung, wie z.B. eine Biegung bzw. Krümmung des Ausgangswerkstoffs, des Hybridhalbzeugs.

Die IT-Toleranzklassen sind von der International Standard Organisation (ISO) festgelegte Nennmaßbereiche (Kurzzeichen IT). Dabei werden sogenannte IT-Klassen (auch Toleranzgrade genannt) in Mikrometer oder Millimeter in Bezug auf Nennmaße in Millimeter festgelegt. Sie sind so aufgebaut, dass für jedes Maß 18 verschiedene Qualitäten festgelegt werden können. Näheres ist der DIN ISO 286 zu entnehmen.
Das erfindungsgemäß dreidimensional geformte Bauteil erfüllt mindestens die Erfordernisse einer der IT-Klassen 5, 6, 7 oder 8, bevorzugt mindestens der Klasse 7 oder 6.
Voraussetzung für das erfindungsgemäße Bauteil ist das Bereitstellen eines tiefzieh- und streckziehfähigen, platinen- oder bandförmiges Hybrid-Halbzeug das zumindest bereichsweise eine Toleranzausgleichschicht aus Kunststoff aufweist, wobei das Metallblech in dem Bereich der Toleranzausgleichschicht eine die Haftung dieser Schicht verbessernde Oberfläche aufweist. Dementsprechend weist in einer Ausführung, das Hybrid-Halbzeug auf der gesamten Fläche eine Toleranzausgleichschicht aus Kunststoff auf. In einer Alternative erstreckt sich mithin die Toleranzausgleichschicht über eine Seite des Metallblechs, diese ist also vollflächig mit einer Toleranzausgleichschicht abdeckt. In einer weiteren Alternative erstreckt sich die Toleranzausgleichschicht über beide Seiten des Metallblechs, beide Seiten sind also vollflächig mit der Toleranzausgleichschicht abdeckt.
Im Sinne der Erfindung bedeutet tiefziehfähig, streckziehfähig, sowie auch das später genannte KTL-fähig bzw. KTL beschichtbar, dass diese Prozesse (also Tiefziehen, Streckziehen sowie KTL-Beschichten) durchführbar sind, ohne eine Beschädigung des Hybridhalbzeugs, insbesondere ohne eine Delamination der Toleranzausgleichschicht von dem Metallblech.
Für die Beurteilung der Tiefziehfähigkeit des Hybrid-Halbzeugs wird im Sinne der Erfindung wird die Methode der Herstellung von Vierkantnäpfen (Vierkantproben) herangezogen. Ein erfindungsgemäß einzusetzendes Hybrid-Halbzeug erfüllt die Voraussetzungen, falls an den Vierkantproben keine makroskopischen Versagensstellen (Delamination) im Bereich der Beschichtung zu erkennen ist. Im Einzelnen erfolgt die Prüfung mit folgenden Parametern: Stempel:_70_x_70_mm; Ziehspalt:_1,93/2,43*_mm; Eckenradius:_R10_mm, Ziehradius:_R5/R6*_mm; Ziehfolie:SPV_6065E5_HP und Beölung RP4107S_1,5_g/m².
Für die Beurteilung der Streckziehfähigkeit des Hybrid-Halbzeugs wird im Sinne der Erfindung die Methode der Erichsentiefung nach DIN EN ISO 20482 bei Raumtemperatur eingesetzt. Ein erfindungsgemäß einzusetzendes Hybrid-Halbzeug erfüllt die Voraussetzungen, falls bis zum Erreichen der Versagensgrenze des Metallblechs makroskopisch keine Auffälligkeiten (Delamination) zu erkennen ist. Im Einzelnen erfolgt die Prüfung mit folgenden Parametern: Werkzeugdaten nach Erichsen: Durchmesser 20 mm Halbrund; Durchmesser 27 mm Matrize; R 0,75 mm; Ziehgeschw. 0,1 mm/sec.; Beölung mit Ziehfett.
Die als Toleranzausgleichschicht dienende thermoplastische, duroplastische oder elastomere Kunststoffschicht fließt beim Tief-und Streckziehen des erfindungsgemäß einzusetzenden Halbzeugs mit dem Metallblech mit und verliert dabei ihre Haftung nicht.
Für die Beurteilung der KTL-Beschichtbarkeit des Hybrid-Halbzeugs wird im Sinne der Erfindung die Temperaturbeständigkeit des Hybrid-Halbzeugs insbesondere auf Delamination geprüft. Das erfindungsgemäß einzusetzende Hybridhalbzeug ist temperaturstabil im Bereich von -20 °C, bevorzugt von -30 °C, besonders bevorzugt von -40 °C bis zu maximal 200 °C, bevorzugt 230 °C, besonders bevorzugt von bis zu 260 °C. Auch nach einer KTL-Beschichting, die auf der Metalloberfläche, nicht aber auf der Oberfläche der Toleranzausgleichschicht, ist keine Delamination festzustellen.

Die Herstellung des erfindungsgemäß eingesetzten Metallblechs kann nach dem Fachmann bekannten Verfahren erfolgen. Insbesondere kann als Metallblech ein Warmband oder ein Kaltband, weiter bevorzugt als Coil oder als Platine, eingesetzt werden.

Das erfindungsgemäß einzusetzende Hybrid-Halbzeug weist zumindest im Bereich der Toleranzausgleichschicht eine die Haftung der Kunststoffschicht verbessernde Oberfläche auf. Um eine solche Oberfläche zu erhalten, kann das Metallblech einer entsprechenden Oberflächenbehandlung unterworfen werden. Eine modifizierte Oberfläche im Sinne der Erfindung ist das Ergebnis einer Oberflächenbehandlung. Bei der Oberflächenbehandlung kann es sich um eine Plasmabehandlung, Plasmabeschichtung, Koronabehandlung oder das Auftragen einer Schicht handeln. Das Auftragen einer Schicht kann mit jedem dem Fachmann bekannten und für die Schicht und für die Oberfläche des Metallblechs geeigneten Verfahren durchgeführt werden, bevorzugt mittels eines Verfahrens ausgewählt aus der Gruppe enthaltend oder bestehend aus Gasphasenabscheidung, Spritzen, Lackieren, Tauchlackierung, Schmelztauchen, Schlitzdüsenbeschichten, Rakelbeschichten, Tauchbeschichten, Sprühbeschichten, Walzbeschichten, Galvanisierten, thermisches Spritzen, Coil Coating, Dip Coating und Pulverbeschichten, bevorzugt Coil-Coating-, Dip- oder Dropcoating-Verfahren, besonders bevorzugt Coil-Coating-Verfahren, beispielsweise mittels einer Applikation mit Hilfe von Walzen als Coaterwalzen oder/und als Abquetschwalzen.
Aufgrund der oben genannten Oberflächenbehandlung oder Auftragen einer Schicht ist die modifizierte Oberfläche, also die Grenzfläche des Metallblechs oder Kontaktfläche, eine die Haftung der 1. Toleranzausgleichschicht verbessernde Oberfläche. Die Oberfläche des Metallblechs liegt so modifiziert vor, dass sie im Vergleich zu einer Oberfläche ohne diese Modifikation, eine bessere Haftung der 1. Toleranzausgleichschicht gewährleistet.
In einer Alternative ist die modifizierte Oberfläche eine gereinigte Oberfläche. Die Reinigung erfolgt mit einem dem Fachmann bekannten Verfahren.
In einer weiteren Alternative ist die modifizierte Oberfläche als Grenzfläche (Kontaktfläche) der Metall-Komponente, die auch als Grenzschicht ausgebildet sein kann, nachweisbar. Bei der modifizierten Oberfläche handelt es sich in dieser Alternative nicht um eine Metalloberfläche bzw. Phase die in allen Eigenschaften identisch zu jener der Metall-Komponente ist. Vielmehr liegt eine der Metall-Komponente zuzuordnende, nachweisbare Grenzfläche auf der Metall-Komponente vor, welche aufgrund einer durchgeführten Modifikation andere Eigenschaften aufweist als eine nichtbehandelte Metallblechoberfläche. Eine Reinigung, also das Entfernen von Verunreinigungen, entspricht in dieser Alternative nicht einer Verbesserung der Oberfläche, da durch die Reinigung keine Modifikation der Grenzfläche stattfindet und somit auch keine nachweisbare, modifizierte Oberfläche vorliegt.

In einer Ausführung wird auf das Metallblech, unmittelbar oder auf eine wie oben beschriebene modifizierte Oberfläche, eine die Haftung der 1. Toleranzausgleichschicht verbessernde Schicht aufgetragen. Bevorzugt wird dazu das Metallblech zumindest in einem Kontaktbereich zur 1. Toleranzausgleichschicht mit einer wässerigen Konversionszusammensetzung in Kontakt gebracht, die Zink, Mangan und Phosphorpentoxid enthält.
Das Auftragen der wässrigen Konversionszusammensetzung kann mit dem Fachmann bekannten Verfahren durchgeführt werden, bevorzugt mittels eines Verfahrens ausgewählt aus der Gruppe enthaltend oder bestehend aus Spritzen, Schlitzdüsenbeschichten, Rakelbeschichten, Tauchbeschichten, Sprühbeschichten, Walzbeschichten und Coil Coating. Anschließend wird der hiermit hergestellte Flüssigkeitsfilm aufgetrocknet, sodass eine Schicht ausgebildet wird.
In einer Alternative wird, in einem wie oben beschriebenen Verfahren, eine nasschemische Konversionszusammensetzung für alle gängigen Metallsubstrate in einer dünnen haftvermittelnden Konversionsbeschichtung aufgebracht. In einer Alternative wird das Metallblech mit einer wässerigen Konversionszusammensetzung in Kontakt gebracht wird, die enthält: 0,5 bis 20 g/L Zink, 0,01 bis 10 g/L Mangan, 0,01 bis 10 g/L Aluminium, 0,01 bis 1 g/L Chrom(III), 0,01 bis 5 g/L Eisen(II), 0,01 bis 5 g/L Eisen(III) oder/und 0,01 bis 5 g/L Magnesium, 0 oder 0,01 bis 5 g/L der Summe an Nickel oder/und Kobalt, 0 oder 0,01 bis 5 g/L der Summe an Molybdän, Tantal, Vanadium oder/und Wolfram, 2 bis 100 g/L P2O5, die 2,68 bis 133,8 g/L PO4 entsprechen, 0,1 bis 10 g/L Polyacrylsäure, jedoch nicht mehr als 25 % des Gehalts der Zusammensetzung an P2O5 in g/L, und 0 oder 0,01 bis 3 g/L Silan, jedoch nicht mehr als 25 % des Gehalts der Zusammensetzung an P2O5 in g/L.
In einer weiteren Alternative ist die Konversionszusammensetzung Chrom-frei, die Chrom-Konzentration liegt mithin unterhalb der Nachweisgrenze oder ist so gering, dass sie die in der Stahlherstellung und/oder Beschichtung von Blechen gültige Standards im Bereich Health, Safety & Environment (HSE) erfüllt. Die Konversionsbeschichtungsverfahren kann alternativ ohne einen Aktivierungsschritt mit einem kolloidalen Titanphosphat oder mit einem Oberflächenkonditionierungsmittel (Surface Conditioner) auf Basis von Phosphatpartikeln erfolgen. Die wässerige Konversionszusammensetzung kann vorzugsweise auch 0,001 bis 20 g/L oder 0,2 bis 10 g/L an mindestens einem weiteren wasserlöslichen oder/und wasserdispergierbaren organischen Polymer/Copolymer neben Polyacrylsäure enthalten. In einer weiteren Alternative ist die resultierende Konversionsschicht ist vorzugsweise völlig röntgenamorph oder röntgenamorph mit geringen kristallinen Anteilen. Die Konversionsbeschichtung kann in vielen Ausführungsvarianten weitgehend oder gänzlich amorph ausgebildet sein und weder Partikel, noch feinste Hohlräume mit bloßem Auge erkennbar zeigen.

Im Sinne der Erfindung erfolgt die Ermittlung der Rauheit Rz entsprechend der Norm DIN EN ISO 4288. Die Rauheit Rz beträgt in einer Alternative mindestens 0,05 µm, bevorzugt mindestens 0,1 µm, besonders bevorzugt mindestens 0,5 µm, insbesondere mindestens 1 µm bis maximal 1000 µm, bevorzugt maximal 750 µm, 500 µm, besonders bevorzugt maximal 250 µm, 100 µm, insbesondere maximal 50 µm, 10 µm.

In einer weiteren Ausführung der Erfindung weisen beide Seiten des Metallblechs zumindest Bereiche mit einer Toleranzausgleichsschicht auf. Mindestens in diesen Bereichen weist die Oberfläche des Metallblechs eine die Haftung der Toleranzausgleichschicht verbessernde Oberfläche auf.

Eine vorteilhafte Ausgestaltung des erfindungsgemäßen Halbzeugs ist dadurch gekennzeichnet, dass die Kunststoffschicht (Toleranzausgleichschicht) die Seite des Metallblechs, auf welcher sie aufgebracht ist, nicht vollflächig, sondern partiell, also bereichsweise bzw. zumindest in einem Bereich der kleiner als die Oberfläche einer Seite des Metallblechs ist, bedeckt. Dies spart Materialkosten und trägt zu einer optimierten Gewichtseinsparung bei. Es ist selbsterklärend, dass das Bauteil eine der IT-Klassen 5-8, insbesondere 6 oder 7, bevorzugt im Bereich der Toleranzausgleichschicht, beziehungsweise lediglich im Bereich der Toleranzausgleichschicht aufweist.

Eine weitere vorteilhafte Ausgestaltung des erfindungsgemäßen Halbzeugs besteht darin, dass auf beiden Seiten des Metallblechs jeweils eine thermoplastische, duroplastische oder elastomere Kunststoffschicht vorliegen.

Eine weitere Ausführung betrifft ein Metallblech welches vollflächig ein-oder beidseitig eine Toleranzausgleichsschicht wie oben beschrieben aufweist. Einzelne Bereiche aber auch Seiten sind in einer Alternative mit unterschiedlichen Kunststoffen beschichtet.

Eine Ausführung der Erfindung ist dadurch gekennzeichnet, dass das Hybrid-Halbzeug KTL-beschichtbar oder beschichtet ist, wie oben beschrieben, allerdings lediglich auf den nicht mit der Toleranzausgleichsschicht beschichteten Flächen und/oder Kanten.

In einer Ausführung ist das Bauteil dadurch gekennzeichnet, dass das Metallblech eine Dicke von mindestens 0,1 mm, bevorzugt mindestens 0,2 mm, 0,25 mm, 0,3 mm, 0,4 mm, 0,5 mm, bis maximal 5 mm, bevorzugt maximal 4 mm, 3 mm, besonders bevorzugt maximal 2 mm, 2,5 mm, 2 mm, 1,75 mm 1,5 mm, 1,25 mm, 1 mm, oder 0,9 mm, 0,8 mm, 0,7 mm, 0,6 mm, 0,5 mm, 0,4 mm, 0,3 mm, 0,25 mm, 0,2 mm aufweist.

Das erfindungsgemäß eingesetzte Metallblech kann unbeschichtet eingesetzt werden. Das erfindungsgemäß eingesetzte Metallblech wird in einer Alternative beschichtet eingesetzt. Entsprechende, insbesondere vor Korrosion schützende Beschichtungen, sind dem Fachmann an sich bekannt und sind zum Beispiel anorganische Beschichtungen wie Metalle oder Keramiken oder organische Beschichtungen auf Polymerbasis. Als metallische Bänder, Coils oder/und Bleche und insbesondere zur Verwendung im Halbzeug können vor allem solche metallischen Lagen Einsatz kommen, die gegebenenfalls mit einer metallischen Schicht oder/und mit mindestens einer Schutzschicht z.B. auf Basis von Haftvermittler-, Passivierungs- oder Vorbehandlungsschicht beschichtet sein können, und die aus einem der folgenden Werkstoffe sind: Elektrolytisch verzinktes Stahlblech ZE, z.B. elektrolytisch mit einer Magnesium oder/und Zink enthaltenden Legierung wie z.B. mit ZnNi, ZnCo, ZnMg beschichtetes Stahlblech, schmelztauchverzinkt; Stahlblech Z, durch Schmelztauchen in eine aufgeschmolzene Aluminium- oder/und Zink-haltige Legierung wie z.B. einer mit AI-, ZnAI-, ZnMg- oder/und ZnAlMg-Legierung beschichtetes Stahlblech; verchromtes Blech wie z.B. verchromtes Stahlblech; Blech aus Aluminium, Aluminiumlegierung, Magnesium, Magnesiumlegierung oder/und Edelstahl. Falls eine metallische Lage beschichtet ist, kann sie einseitig oder beidseitig beschichtet sein. Diese Beschichtungen können je nach Seite in ihrer Dicke, Ausprägung oder/und Zusammensetzung unterschiedlich oder gleichartig sein und können beispielsweise auch auf einer metallischen Beschichtung zusätzlich noch mindestens eine Konversionsschicht oder/und Passivierungsschicht aufweisen.

Bevorzugt werden metallische Beschichtungen basierend auf Zink oder Aluminium oder Zinklegierungen oder Aluminiumlegierungen, gegebenenfalls in Kombination mit Silizium und/oder Magnesium eingesetzt. Die vorliegende Erfindung verwendet daher bevorzugt ein Halbzeug, welches ein Metallblech enthält, welches eine Oberflächenbeschichtung aufweist. Die Beschichtung kann auf das erfindungsgemäß eingesetzte Metallblech im Allgemeinen nach allen dem Fachmann bekannten Verfahren aufgebracht werden, beispielsweise elektrolytische Beschichtung, Schmelztauchverfahren oder Aufdampfen. Die Beschichtung kann ein- oder beidseitig vorliegen. Wird das in dem erfindungsgemäßen Halbzeug vorliegende Metallblech mit einer entsprechenden Oberflächenbeschichtung versehen und verwendet, ist es vorteilhafterweise besser gegen Korrosion geschützt.

Das erfindungsgemäß einzusetzende Halbzeug weist mindestens eine auf dem Metallblech stoffschlüssig aufgebrachte Toleranzausgleichsschicht aus thermoplastischem, duroplastischem oder elastomerem Kunststoff auf.

Erfindungsgemäß bevorzugt ist der mindestens eine thermoplastische Kunststoff ausgewählt aus der Gruppe bestehend aus Polyolefinen, Polyamiden (PA), Polycarbonaten (PC), thermoplastischen Polyestern, thermoplastischen Polyurethanen (PU), Polysulfiden (PS), Polyetheretherketonen (PEEK), Polyarylen, aromatischen Polyestern, Polyaramiden, Polyaramid-Fasern, heterocyclischen Polymeren, Flüssigkristallpolymeren (LCP Liquid Crystalline Polymers), Fluorpolymeren, Perfluoroxyalkanen, Polyphenylenen, funktionalisierten Varianten der genannten Polymere und Mischungen davon.

Beispiele für erfindungsgemäß einsetzbare Polyolefine sind ausgewählt aus der Gruppe bestehend aus Acrylnitril-Butadien-Styrolen (ABS), Polymethyl(meth)acrylaten (PM(M)A), Polyethylenen (PE), Polypropylenen (PP), Polystyrolen (PS), Polyvinylchloriden (PVC) und Mischungen davon.

Beispiele für erfindungsgemäß einsetzbare Polyester sind ausgewählt aus der Gruppe bestehend aus Polyethylenterephthalat (PET), Polylactaten (PLA) und Mischungen davon.

Beispiele für erfindungsgemäß einsetzbare Polyaramide sind ausgewählt aus der Gruppe bestehend aus Poly-m-phenylenisophthalamid (PMI), Polyaramid-Fasern und Mischungen davon.

Beispiele für erfindungsgemäß einsetzbare heterocyclische Polymere sind ausgewählt aus der Gruppe bestehend aus Polyimiden, Polybenzimidazolen, Polyetherimiden und Mischungen davon.

Für die vorliegende Erfindung wird daher bevorzugt das ein Hybrid-Halbzeug eingesetzt, wobei der mindestens eine thermoplastische Kunststoff ausgewählt ist aus der Gruppe enthaltend oder bestehend aus Polyolefinen, Polyamiden (PA), Polycarbonaten (PC), thermoplastischen Polyestern, thermoplastischen Polyurethanen (PU), Polysulfiden (PS), Polyetheretherketonen (PEEK), Polyarylen, aromatischen Polyestern, Polyaramiden, Polyaramid-Fasern, heterocyclischen Polymeren, Flüssigkristallpolymeren (LCP Liquid Crystalline Polymers), Fluorpolymeren, Perfluoroxyalkanen, Polyphenylenen, funktionalisierten Varianten der genannten Polymere, Mischungen oder Reaktionsprodukte davon, bei denen mindestens ein Edukt eines der genannten Polymere ist, sowie Compounds enthaltend mindestens eines der genannten Polymere.

In einer bevorzugten Alternative wird die thermoplastische Kunststoffschicht aus einem Compound enthaltend Polyamid und Polyethylen gebildet. Im Sinne der Erfindung werden als Compound (engl. für Verbundstoff, Zusammensetzung) Kunststoffe bezeichnet, denen zusätzliche Füllstoffe, Verstärkungsstoffe oder andere Additive beigemischt worden sind. Durch die Compoundierung werden somit mindestens zwei Stoffe fest miteinander verbunden. Ziel der Compoundierung ist es, die Eigenschaften der Kunststoffe auf einen Anwendungsfall hin zu modifizieren. Die thermoplastische Kunststoffschicht kann als auf dem Metallblech aufgebrachte Toleranzausgleichschicht sowohl das Reaktionsprodukt der Ausgangsstoffe, bevorzugt PA und PE, insbesondere gepfropftes PE, als auch noch Anteile dieser Ausgangsstoffe enthalten.
In einer besonders bevorzugten Ausführungsform enthält die thermoplastische Kunststoffschicht eine Adhäsivpolymermischung enthaltend Polyamid (PA), mit einer Reaktivkomponente gepfropftes Polyethylen (PE), mindestens ein Reaktivpolymer, mindestens einen Füllstoff und ggf. Additive. Eine solche Adhäsivpolymermischung wird beispielsweise in EP 1 651 432 B1 beschrieben.

Das bevorzugt eingesetzte Polyamid ist weiter bevorzugt PA 6 und/oder PA 6,6, insbesondere eine Mischung enthaltend PA bestehend aus ≥ 90 Massen-% PA 6 mit Verunreinigungen < 10 Massen-% an PA 6.6

Die Reaktivkomponente ist bevorzugt Maleinsäureanhydrid (MAH). Bevorzugt wird daher eine MAH-gepfropfte PE-Komponente umfassend, insbesondere bestehend aus, 80 bis 95, insbesondere 89, Massen-% Ethylen-basiertes Octen Plastomer, 5 bis 20, insbesondere 9,05, Massen-% lineares Polyethylen (PE) niedriger Dichte, so genanntes LLD-PE, 0,5 bis 2,5, insbesondere 1,5, Massen-% MAH, 0,1 bis 0,5, insbesondere 0,15, Massen-% organisches Peroxid, beispielsweise Interox DHBP, und 0,1 bis 0,5, insbesondere 0,3, Massen-% Antioxidans, beispielsweise Irganox 1330, Irganox 1098 und Irgafos 168, wobei die Summer der Komponenten jeweils 100 Massen-% ergibt.

Insbesondere bevorzugt wird als thermoplastische Kunststoffschicht eine Adhäsivpolymermischung mit 55,75 Massen-% Polyamid (PA), 40 Massen-% Maleinsäureanhydrid (MAH) gepfropfte Polyethylen-(PE)-Komponente, 2 Massen-% Reaktivpolymer, 2 Massen-% Talk und 0,25 Massen-% Antioxidantien eingesetzt.

Erfindungsgemäß bevorzugt ist der mindestens eine duroplastische Kunststoff ausgewählt aus der Gruppe bestehend aus Epoxidharzen (EP), Harnstoff-Formaldehydharzen (UF), Phenol-Formaldehydharzen (PF), Melamin-Formaldehydharzen (MF), Melamin/Phenol-Formaldehyden (MPF), duroplastischen Polyestern (PES), Polyurethanen (PUR), ungesättigten Polyestern (UP), teilvernetzten (bi-stage) duroplastische Polymere, funktionalisierten Varianten der genannten Polymere und Mischungen davon.

Die vorliegende Erfindung betrifft daher bevorzugt das erfindungsgemäße Halbzeug, wobei der mindestens eine duroplastische Kunststoff ausgewählt ist aus der Gruppe bestehend aus Epoxidharzen (EP), Harnstoff-Formaldehydharzen (UF), Phenol-Formaldehydharzen (PF), Melamin-Formaldehydharzen (MF), Melamin/Phenol-Formaldehyden (MPF), duroplastischen Polyestern (PES), Polyurethanen (PUR), ungesättigten Polyestern (UP), teilvernetzten (bi-stage) duroplastische Polymere, funktionalisierten Varianten der genannten Polymere und Mischungen davon.

Die teilvernetzten (bi-stage) Polymere erhalten ihre finalen Eigenschaften abschließend durch chemisch, thermisch und/oder photolytisch initiierte Polymerisation.

Erfindungsgemäß bevorzugt ist der mindestens eine elastomere Kunststoff ausgewählt aus der Gruppe bestehend aus Naturkautschuken (NR), Silicon-Kautschuken (SIR), Silicon-Butadien-Kautschuken (SBR), Polyvinylbutyralen (PVB), Polyisobutylenen (PIB), Isopren-Kautschuken (IR), Ethylenvinylacetaten (EVA), Ethylen-Propylen-Dien-Kautschuken (EPDM), Ethylen-Propylen-Copolymeren (EPM), Ethylen-Ethylacrylat- Copolymeren (E/EA), Chloropren-Kautschuken (CR), Butadien-Kautschuken (BR), Acrylnitril/ Methylmethacrylaten (A/MMA), Butylkautschuken (IIR), Styrol-Butadien-Styrolen (SBS), Polyether-Block-Amiden (PEBA), funktionalisierten Varianten und Mischungen davon.

Für die vorliegende Erfindung wird in einer Alternative ein Hybrid-Halbzeug eingesetzt, wobei der mindestens eine elastomere Kunststoff ausgewählt ist aus der Gruppe bestehend aus Naturkautschuken (NR), Silicon-Kautschuken (SIR), Silicon-Butadien-Kautschuken (SBR), Polyvinylbutyralen (PVB), Polyisobutylenen (PIB), Isopren-Kautschuken (IR), Ethylenvinylacetaten (EVA), Ethylen-Propylen-Dien-Kautschuken (EPDM), Ethylen-Propylen-Copolymeren (EPM), Ethylen-Ethylacrylat- Copolymeren (E/EA), Chloropren-Kautschuken (CR), Butadien-Kautschuken (BR), Acrylnitril/ Methylmethacrylaten (A/MMA), Butylkautschuken (IIR), Styrol-Butadien-Styrolen (SBS), Polyether-Block-Amiden (PEBA), funktionalisierten Varianten und Mischungen davon.

Als Kunststoffschicht können auch FGL-Polymere ausgewählt aus der Gruppe bestehend aus Ethylen-Vinyl-Acetat (EVA), Polyurethan-Schaum, EVA-Schaum, thermoplastischen Polyurethanen, beispielsweise TPU 262A, Polybenzoxazine, Polycaprolactone und Mischungen davon eingesetzt werden.

Für alle genannten, erfindungsgemäß einsetzbaren Polymere gilt, dass diese ebenfalls als Mischungen, Compounds sowie Polymere die durch Zuschlagstoffe funktionalisiert sind, eingesetzt werden können.

Das stoffschlüssige Aufbringen der mindestens einen thermoplastischen, duroplastischen oder elastomeren Kunststoffschicht auf dem Metallblech kann im Prinzip nach allen dem Fachmann bekannten Verfahren erfolgen. Bevorzugt erfolgt das Aufbringen durch kontinuierliche oder diskontinuierliche Verfahren, wobei Stahlbänder und/oder Tafeln verarbeitet werden können. Beispielhaft seien Verfahren genannt unter Verwendung einer Plattenpresse, einer Laminieranlage, eines Kalanders, einer Doppelbandpresse oder einer Bandbeschichtungsanlage. Solche Verfahren sind dem Fachmann an sich bekannt und in WO 2015/032623 A1 beschrieben.

Die auf dem Metallblech stoffschlüssig aufgebrachte thermoplastische, duroplastische oder elastomere Toleranzausgleichsschicht weist eine Dicke im Bereich von mindestens 0,01 mm, bevorzugt 0,02 mm, besonders bevorzugt mindestens 0,025, 0,03, 0,04, 0,05 mm bis maximal 1,2 mm, vorzugsweise maximal 1,0 mm, 0,9 mm, 0,8 mm, 0,7 mm, 0,6 mm, 0,5 mm, besonders bevorzugt maximal 0,4 mm, 0,3 mm, 0,2 mm, 0,1 mm.

In einer Ausführung ist auf der 1. Toleranzausgleichschicht stoffschlüssig und klebstofflos zumindest bereichsweise eine zweite Toleranzausgleichschicht aus einem Kunststoff angeordnet. Diese weist eine Dicke von mindestens 1 µm, bevorzugt mindestens 2 µm, 5 µm, 10 µm, 25 µm, 50 µm 100 µm, 250 µm 500 µm und maximal 5000 µm, bevorzugt maximal 4000 µm, 3000 µm, 2000 µm, 1000 µm, oder maximal 900µ, 800µm, 700 µm, 600 µm, 500 µm, 400 µm, 300 µm, 200 µm, 100 µm auf.

Im Falle einer 2. Toleranzausgleichschicht erfüllt die 1. Toleranzausgleichsschicht die Funktion als Koppelschicht, sich mit einer Vielzahl von anderen Kunststoffen zuverlässig, ohne Aufbringen von Klebstoff, stoffschlüssig zu verbinden. Im Spritzgussprozess wird hierzu beispielsweise die Energie der Kunststoffschmelze genutzt, um die Oberfläche der Koppelschicht (1. Toleranzausgleichsschicht) zu aktivieren und den Stoffschluss herzustellen. Nach Abkühlung der Schmelze liegt ein perfekter Verbund zwischen der 1. Toleranzausgleichschicht und dem angespritzten Kunststoff als 2. Toleranzausgleichschicht vor. Bei dem angespritzten Kunststoff kann es sich nicht nur um thermoplastischen Kunststoff, sondern auch um duroplastischen Kunststoff und/oder um einen Kunststoff aus dem Bereich der Elastomere handeln. In einer Alternative kann jeder der oben als 1. Toleranzausgleichsschicht beschriebenen Kunststoffe als 2. Toleranz Ausgleichschicht eingesetzt werden, beliebige Kombinationen sind mithin möglich. Weiterhin ist es möglich, durch Plasma- oder Coronavorbehandlung vor dem Spritzgießprozess die 1. Toleranzausgleichsschicht zusätzlich zu aktivieren, um das Spektrum der einsetzbaren Kunststoffe zu erweitern. In einer Alternative wird für die 1. und die 2. Toleranzausgleichsschicht der gleiche Kunststoff verwendet.

In einer Alternative ist die 1. und/oder gegebenenfalls 2. Toleranzausgleichsschicht ein Faser-Polymer Verbundsystem enthaltend oder bestehend aus einem der oben genannten Kunststoffe sowie mindestens ein Fasermaterial. Das Fasermaterial ist ausgewählt aus der Gruppe enthaltend oder bestehend aus Karbonfasern, Glasfasern, Naturfasern, Aramidfasern, Polymerfasern, Metallfasern, Keramikfasern, mineralische Fasern, recycelte Fasern oder deren Mischungen. Hierbei ist ferner der Einsatz als Kurzfaser, Langfaser und/oder als End-losfaser vorstellbar. Insbesondere können die Fasern als Roving, Matte, Gewebe, Vlies, Tape und/oder Gelege bereitgestellt werden. Gemäß einer kumulativen oder alternativen Ausführungsform des Halbzeugs weist die Schicht aus Faser-Polymerverbundsystem zumindest bereichsweise variierende geometrische, elektromagnetische, dämpfende und/oder mechanische Eigenschaften auf. Die Schicht aus Faser-Polymerverbundsystem kann bereichsweise unterschiedliche Dicken und/oder Materialien aufweisen. Unterschiedliche Materialien in der Schicht aus dem Faser-Polymerverbundsystem können in der Dicke, Breite und/oder Länge hinsichtlich der verschiedenen Polymermatrix- und/oder Fasermaterialien (z. B. Karbon-, Glasfasern etc.) nebeneinander und/oder übereinander variieren. Des Weiteren können bereichsweise die Faserarten (z. B. Gelege, Gewebe, Vlies etc.) und/oder die Anordnung der Fasern (z. B. Atlas-, Köper-, Leinwandbindung etc.) und/oder der Ausrichtungswinkel der Fasern, insbesondere der Faservolumenanteil respektive die Faserdichte variieren. Kumulativ kann die Schicht aus dem Faser-Polymerverbundsystem zumindest bereichsweise einen Füllstoff aufweisen. Als Füllstoffe können insbesondere organische und/oder anorganische Partikel, Karbon-Nanotubes, Graphene-Nanoplatelets, Füllkugeln, Hohlkugeln oder deren Mischungen, insbesondere bereichsweise zur Erhöhung der Festigkeit, verwendet werden. Insbesondere können auch bereichsweise faserfreie Bereiche in dem Faser-Polymerverbundsystem vorgesehen sein. Die Eigenschaften, wie z. B. Leitfähigkeit, elektromagnetische, akustische, thermische Abschirmung und/oder Dämpfung, Steifigkeit, Festigkeit und/oder Impactverhalten, des Halbzeugs respektive des herzustellenden Bauteils können dadurch kumulativ oder alternativ zu der variierenden Ausführung der metallischen Schicht gezielt positiv beeinflusst werden. Weitere Details können der WO2018141982A1 entnommen werden.

Der Inhalt aller genannten Patentschriften auf die Bezug genommen wird, ist hiermit in die Offenbarung dieser Anmeldung aufgenommen.

In einer weiteren Ausführungsform ist das erfindungsgemäße Bauteil dadurch gekennzeichnet, dass die erste und/oder die zweite Toleranzausgleichschicht ein Formtoleranz- und/oder Lagetolerantausgleich ist. In einer Alternative können somit Formtoleranzen ausgeglichen werden, ausgewählt aus Gruppe enthaltend oder bestehend aus Geradheit, Ergebenheit, Rundheit, Zylinderform, Linienform und Flächenform, bevorzugt Zylinderform und/oder Rundheit In einer weiteren Alternative oder gleichzeitig können Lagetoleranzen kompensiert werden, insbesondere sofern durch die 2. Toleranzausgleichsschicht eine solche Geometrie erreicht werden kann, ausgewählt aus der Gruppe enthaltend oder bestehend Parallelität, Rechtwinkligkeit, Neigung, Position, Koaxialität, Symmetrie, Rund-/Planlauf und Gesamtrund-/Planlauf, besonders bevorzugt Koaxialität und/oder Parallelität und/oder Rechtwinkligkeit.

Eine Ausführungsform betrifft das erfindungsgemäße Bauteil dadurch gekennzeichnet, dass es ein Gehäuse oder ein Gehäuseteil ist, insbesondere ein Gehäuse oder Gehäuseteil einer elektrischen Maschine oder auch die sich in der gleichen Gehäusestruktur befindlichen weiteren Komponenten wie Getriebe oder Leistungselektronik. Als elektrische Maschine wird beispielsweise ein Elektromotor oder ein Generator oder ein Transformator bezeichnet.

Ein weiterer Gegenstand der Erfindung ist ein Verfahren zum Herstellen eines dreidimensional geformtes Bauteils einer der IT-Klassen 5-8, dadurch gekennzeichnet, dass ein tiefzieh- und streckziehfähiges, platinen- oder bandförmiges Hybrid-Halbzeug, das mindestens ein platinen- oder bandförmiges Metallblech und mindestens eine auf dem Metallblech stoffschlüssig, mindestens bereichsweise aufgebrachte Toleranzausgleichschicht aus Kunststoff aufweist; und der Bereich des Metallblechs, auf welchem die Toleranzausgleichschicht aufgebracht ist, eine die Haftung der Toleranzausgleichschicht verbessernde Oberfläche aufweist und die Oberfläche der Toleranzausgleichschicht eine mittlere Rauheit Rz von mindestens 0,05 µm bis maximal 1000 µm aufweist, dreidimensional geformt wird.

Eine Ausführung betrifft ein Verfahren zum Herstellen eines dreidimensional geformten Bauteils wie oben beschrieben.

In einer weiteren Ausführung ist das Verfahren dadurch gekennzeichnet, dass auf die Toleranzausgleichschicht des Hybrid-Halbzeugs vor, während oder nach dem dreidimensionalen Umformen eine weitere Toleranzausgleichschicht stoffschlüssig und klebstofflos aus einem Kunststoff zumindest bereichsweise aufgebracht wird.

In einer Alternative wird das dreidimensional geformten Bauteil durch Tiefziehen oder Rollformen geformt.

Mit dem erfindungsgemäß einzusetzenden Halbzeug wird in einer Alternative das dreidimensional geformten Bauteil in folgende Prozessschritte hergestellt:
(A) Platinen- oder bandförmiges Hybrid-Halbzeug konfektionieren (Zuschneiden);
(B) Zugeschnittenes Halbzeug zu einem Umformwerkzeug mit integriertem Spritzgießaggregat transportieren und einlegen;
(C) Umformen des Halbzeugzuschnitts;
(D) Gegebenenfalls Hinterspritzen des Halbzeugzuschnitts, optional mit gleichzeitiger Kühlung.

Eine weitere vorteilhafte Ausgestaltung des erfindungsgemäßen Verfahrens ist dadurch gekennzeichnet, dass das Hybrid-Halbzeug mittels eines Umformwerkzeuges, das mindestens eine integrierte Spritzgießkavität und mindestens einen in die Spritzgießkavität mündenden Spritzgießkanal aufweist, umgeformt wird. Diese Ausgestaltung bietet die Möglichkeit, die Anzahl der Prozessschritte zur Herstellung des Bauteils zu reduzieren, indem das Umformen des Halbzeuges bzw. Halbzeugzuschnitts und das Hinterspritzen der der 1. Toleranzausgleichsschicht zur Erzeugung der 2. Toleranzausgleichschicht, im gleichen Prozessschritt durchgeführt werden.

Eine andere vorteilhafte Ausgestaltung des erfindungsgemäßen Verfahrens ist dadurch gekennzeichnet, dass das Halbzeug mittels eines Umformwerkzeuges, welches ein Profil mit mindestens einer integrierten Kavität zum Verpressen und dreidimensionalen Formen einer Kunststoffmasse aufweist, umgeformt wird. Auch diese Variante bietet die Möglichkeit, die Anzahl der Prozessschritte zur Herstellung des Hybridbauteils zu reduzieren, indem das Umformen des Halbzeuges bzw. Halbzeugzuschnitts und das Verpressen der Kunststoffmasse zur Erzeugung der 2. Toleranzausgleichschicht, auf der 1. Toleranzausgleichschicht im gleichen Prozessschritt durchgeführt werden.

Eine weitere Variante des erfindungsgemäßen Verfahrens besteht darin, dass das Halbzeug durch Rollformen umgeformt wird, wobei während oder nach dem Umformen des Halbzeuges ein rotierbares, radförmiges Werkzeug zum Pressformen der 2. Toleranzausgleichschicht verwendet wird, und wobei das Werkzeug mit einem mindestens eine Kavität aufweisenden Profil zum Verpressen und dreidimensionalen Formen einer Kunststoffmasse versehen ist. Mit dieser Ausgestaltung des Verfahrens lassen sich insbesondere als Profilträger ausgebildete Bauteile der genannten Art in Großserie effektiv herstellen.

Nach einer weiteren Ausgestaltung des erfindungsgemäßen Verfahrens wird an dem Hybridbauteil mindestens ein integraler Flansch ausgebildet, der die 1. Toleranzausgleichsschicht aufweist, wobei an diese Kunststoffschicht ein weiteres als Metall/Kunststoffverbund ausgeführtes Hybrid-bauteil oder ein Organoblech durch Schweißen angefügt wird. Auf diese Weise lassen sich beispielsweise als Halbschalen ausgebildete Hybridbauteile kostengünstig zu einem Hohlkanal oder geschlossenen Profil zusammensetzen. Entsprechendes gilt hinsichtlich einer Kombination eines erfindungsgemäßen Hybridbauteils mit einem den Hohlkanal bzw. das geschlossene Profil begrenzenden Organoblech. Die Schweißverbindung der als Halbschalen ausgebildeten Hybridbauteile bzw. des Organoblechs mit einem einzelnen Hybridbauteil kann beispielsweise durch Reibschweißen, Punktschweißen, Ultraschallschweißen etc. erzeugt werden.

Ein weiterer Gegenstand der vorliegenden Erfindung ist die Verwendung einer auf einem platinen- oder bandförmiges Metallblech stoffschlüssig aufgebrachten Kunststoffschicht als Toleranzausgleichschicht.

Gegenstand ist ferner auch die Verwendung einer auf einem platinen- oder bandförmiges Metallblech stoffschlüssig aufgebrachten Kunststoffschicht als Fügeverbindung mit Formtoleranzen einer der IT-Klassen 5-8.

Die Erfindung betrifft außerdem auch die Verwendung eines Bauteils wie oben beschrieben oder hergestellt in einem Verfahren wie oben beschrieben als Bauteil für ein Fahrzeug, Flugzeug, Schiff, Schienenfahrzeug oder im Maschinenbau, in der Energiebranche oder im Bauwesen, als Verpackung, im Sonderfahrzeugbau, in Haushaltsgeräten, im Anlagenbau, in der Schalttechnik oder in der Dichtungstechnik, bevorzugt als Lagersitz, Welle- und/oder Nabeverbindung, Flansch- oder Steckverbindung, Gehäuse, insbesondere für elektrische Maschinen.

Das erfindungsgemäße Bauteil bietet gegenüber dem Stand der Technik folgende Vorteile:
- Die erreichbaren Genauigkeiten nach der Blechumformung/Beschnitt sind gegebenenfalls nicht ausreichend, bzw. schlechter als bei einer Alu-Druckguss-Lösung. Erfindungsgemäß wird die notwendige Genauigkeit durch die Toleranzausgleichsschicht erzielt und damit eine Genauigkeit erreicht, vergleichbar mit der Genauigkeit beim Drehen/Fräsen.
- Es wird ein toleranter Ausgleich bei und nach Fügeoperationen erzielt.
- Durch die reproduzierbare, vollflächige Aufbringung der Toleranzausgleichschicht erfolgt eine verbesserte Haftung der Fügepartner.
- Es wird die Verwendung von Bauteilen mit größeren Toleranzen möglich, da die Abweichung der Soll-Geometrie mit der Toleranzausgleichschicht ausgeglichen wird und dadurch geringere Fertigungskosten entstehen.
- Durch die toleranter Ausgleichschicht ist ein geringerer Verschleiß insbesondere von beweglichen und aneinander treibenden Teilen gewährleistet.
- Es wird ein höherer Wirkungsgrad und/oder geringere Wärmeverluste bei der über beweglich gefügte Teile erreicht.
- Bei Gehäusen erfolgt eine Verbesserung des NVH (noise vibration harshness).
- Die Dichtigkeit der Gehäuse wird verbessert.
- Ebenso wird die Nacharbeit reduziert und Funktionsausfälle werden vermieden.
- Für die genaue Positionierung (Ortstoleranz) eines Lagersitzes, kann die 1. und insbesondere die 2 Toleranzausgleichschicht genutzt werden, um den Rundlauf der Welle sicherzustellen.
- Eine Abweichung der Rundheit eines umgeformten Blechgehäuses (z.B. Ovalität nach Umformung) kann durch die tolerant Ausgleichsschicht kompensiert werden, sodass anschließend die geforderten Genauigkeiten für die Rundheit erfüllt werden.
- Insbesondere Positionen von Punkten und Flächen, die beim Fügen von Gehäuseteile bzw. beim Assembly des Motors als Referenzpunkte/-flächen dienen (z.B. Anschlagspunkte, Anbindungspunkte,und Ähnliches), können durch insbesondere die 2. Toleranzausgleichsschicht mit entsprechend hoher Genauigkeit eingehalten werden.

Nachfolgend wird die Erfindung anhand von Ausführungsbeispielen und darstellenden Zeichnung näher erläutert.

### Figuren

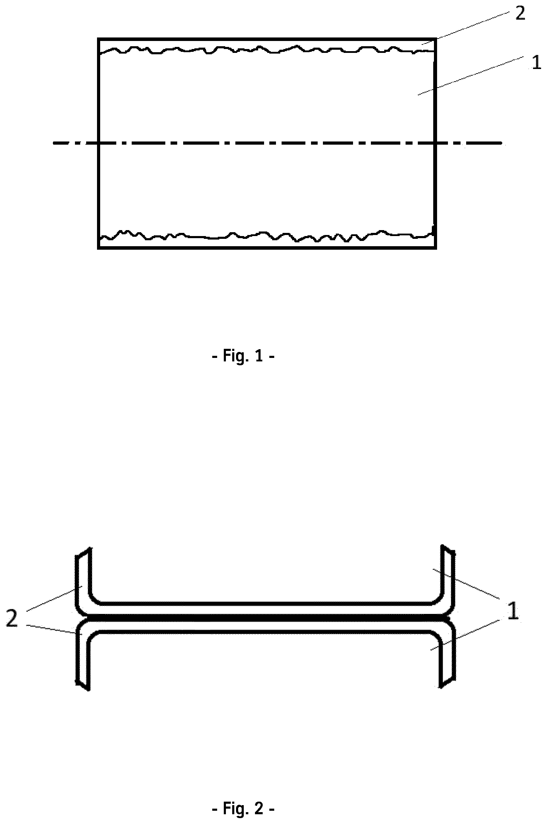

Die in den Figuren 1, 2 und 3 verwendeten Bezugszeichen haben die folgenden Bedeutungen:
- 1: Metallblech
- 2: 1. Toleranzausgleichschicht
- 3: 2. Toleranzausgleichschicht

Figur 1 zeigt schematisch (also nicht maßstabgetreu) ein erfindungsgemäßes dreidimensional (zylindrisch) geformtes Bauteil bei welchem durch die 1. Toleranzausgleichschicht eine Formtoleranz bezüglich Ebenheit und Rundheit kompensiert wird.

Figur 2 zeigt 2 erfindungsgemäß dreidimensional geformte, zum Beispiel tiefgezogene Bauteile, die miteinander über die Toleranzausgleichschicht verfügt wurde. Es wird dadurch eine ebene Fügeverbindung ohne weitere Füge- oder Hilfsmittel erzielt, wodurch eine gleichmäßige Kraftverteilung gewährleistet ist, keine Spannungsspitzen auftreten und keine Nacharbeiten notwendig sind. Im Ergebnis wird eine definierte Verbindung mit höchster Haftfestigkeit zur Verfügung gestellt.

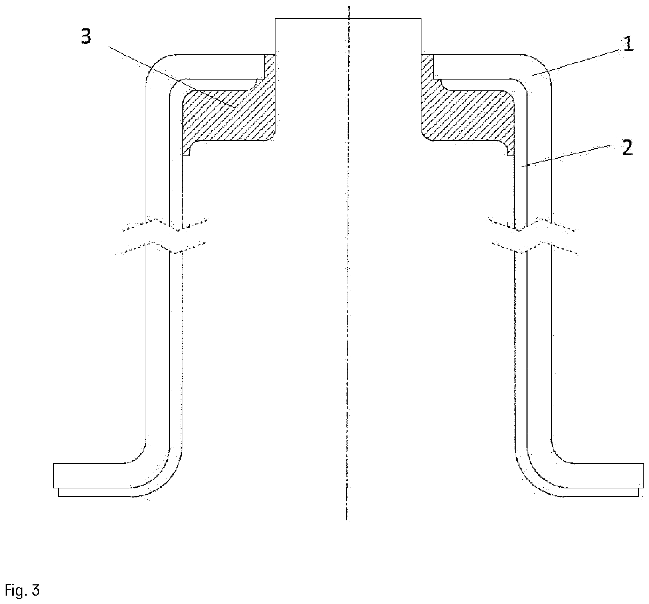

Figur 3 zeigt ein erfindungsgemäßes dreidimensional geformtes Bauteil als Gehäuse, insbesondere Gehäuse einer elektrischen Maschine. Die 2. Toleranzausgleichschicht, im Lagersitz eines Rotors oder einer Welle dient zum Ausgleich von Formtoleranzen (Ebenheit, Rundheit, Zylinderform) und Lagetoleranzen (Position, Koaxialität, Symmetrie, Rund-bzw. Planlauf).

## Patentansprüche

1. Dreidimensional geformtes Bauteil einer der IT-Klassen 5-8 enthaltend ein tiefzieh- und streckziehfähiges, platinen- oder bandförmiges Hybrid-Halbzeug, das mindestens ein platinen- oder bandförmiges Metallblech und mindestens eine auf dem Metallblech stoffschlüssig, mindestens bereichsweise aufgebrachte Toleranzausgleichsschicht aus Kunststoff aufweist; und der Bereich des Metallblechs, auf welcher die Toleranzausgleichsschicht aufgebracht ist, eine die Haftung der Toleranzausgleichsschicht verbessernde Oberfläche aufweist und die Oberfläche der Toleranzausgleichsschicht eine mittlere Rauheit Rz von mindestens 0,05 µm bis maximal 1000 µm aufweist.

2. Bauteil nach Anspruch 1, **dadurch gekennzeichnet, dass** Bereiche mit der Toleranzausgleichsschicht auf beiden Seiten des Metallblechs angeordnet sind.

3. Bauteil nach Anspruch 1 oder 2, **dadurch gekennzeichnet, dass** das Hybrid-Halbzeug KTL-beschichtbar oder beschichtet ist.

4. Bauteil nach einem der Ansprüche 1 bis 3, **dadurch gekennzeichnet, dass** das Metallblech eine Dicke von mindestens 0,1 mm bis maximal 5 mm aufweist.

5. Bauteil nach einem der Ansprüche 1 bis 4, **dadurch gekennzeichnet, dass** die Toleranzausgleichsschicht eine Dicke von mindestens 0,01 mm bis maximal 1,2 mm aufweist.

6. Bauteil nach einem der Ansprüche 1 bis 5, **dadurch gekennzeichnet, dass** der Kunststoff der Toleranzausgleichsschicht ausgewählt ist aus der Gruppe enthaltend thermoplastische, duroplastische oder elastomere Kunststoffe.

7. Bauteil nach einem der Ansprüche 1 bis 6, **dadurch gekennzeichnet, dass** auf der ersten Toleranzausgleichsschicht stoffschlüssig und klebstofflos zumindest bereichsweise eine zweite Toleranzausgleichsschicht aus einem Kunststoff angeordnet ist.

8. Bauteil nach Anspruch 7, **dadurch gekennzeichnet, dass** die zweite Toleranzausgleichsschicht eine Dicke von mindestens 1 µm und maximal 1000 µm aufweist.

9. Bauteil nach einem der Ansprüche 1 bis 8, **dadurch gekennzeichnet, dass** die erste und/oder die zweite Toleranzausgleichsschicht ein Formtoleranz- und/oder Lagetoleranzausgleich ist.

10. Bauteil nach einem der Ansprüche 1 bis 9, **dadurch gekennzeichnet, dass** es ein Gehäuse oder ein Gehäuseteil ist.

11. Verfahren zum Herstellen eines dreidimensional geformten Bauteils einer der IT-Klassen 5-8, **dadurch gekennzeichnet, dass** ein tiefzieh- und streckziehfähiges, platinen- oder bandförmiges Hybrid-Halbzeug, das mindestens ein platinen- oder bandförmiges Metallblech und mindestens eine auf dem Metallblech stoffschlüssig, mindestens bereichsweise aufgebrachte Toleranzausgleichsschicht aus Kunststoff aufweist, und der Bereich des Metallblechs, auf welchem die Toleranzausgleichsschicht aufgebracht ist, eine die Haftung der Toleranzausgleichsschicht verbessernde Oberfläche aufweist und die Oberfläche der Toleranzausgleichsschicht eine mittlere Rauheit Rz von mindestens 0,05 µm bis maximal 1000 µm aufweist, dreidimensional geformt wird.

12. Verfahren nach Anspruch 11, **dadurch gekennzeichnet, dass** auf die Toleranzausgleichsschicht des Hybrid-Halbzeugs vor, während oder nach dem dreidimensionalen Umformen eine weitere Toleranzausgleichsschicht stoffschlüssig und klebstofflos aus einem Kunststoff zumindest bereichsweise aufgebracht wird.

13. Verwendung einer auf einem platinen- oder bandförmiges Metallblech stoffschlüssig aufgebrachten Kunststoffschicht als Toleranzausgleichsschicht.

14. Verwendung einer auf einem platinen- oder bandförmiges Metallblech stoffschlüssig aufgebrachten Kunststoffschicht als Fügeverbindung mit Formtoleranzen einer der IT-Klassen 5-8.

15. Verwendung eines Bauteils nach einem der Ansprüche 1 bis 10 oder hergestellt in einem Verfahren nach einem der Ansprüche 11 bis 12 als Bauteil für ein Fahrzeug, Flugzeug, Schiff, Schienenfahrzeug oder im Maschinenbau, in der Energiebranche oder im Bauwesen, als Verpackung, im Sonderfahrzeugbau, in Haushaltsgeräten, im Anlagenbau, in der Schalttechnik oder in der Dichtungstechnik, bevorzugt als Lagersitz, Welle- und/oder Nabeverbindung, Flansch- oder Steckverbindung, Gehäuse, insbesondere für elektrische Maschinen.
